# EUROPÄISCHE PATENTSCHRIFT

(11) **EP 2 740 169 B1**
(45) Veröffentlichungstag und Bekanntmachung des Hinweises auf die Patenterteilung: **14.09.2016**
(21) Anmeldenummer: 12741247.6
(22) Anmeldetag: 18.07.2012
(51) Int. Cl.: H01M 2/02, H01M 2/26, H01M 10/04, H01M 10/6554

(54) **EINZELZELLE FÜR EINE BATTERIE UND EINE BATTERIE**
INDIVIDUAL CELL FOR A BATTERY, AND A BATTERY
CELLULE UNITAIRE POUR BATTERIE ET BATTERIE

(30) Priorität: 02.08.2011 DE 102011109203
(43) Veröffentlichungstag der Anmeldung: 11.06.2014
(73) Patentinhaber: Daimler AG, 70327 Stuttgart (DE)
(72) Erfinder: HOHENTHANNER, Claus-Rupert, 63457 Hanau (DE); KAUFMANN, Rainer, 70597 Stuttgart (DE); LIEB, Silvio, 01109 Dresden (DE); MEINTSCHEL, Jens, 02994 Bernsdorf (DE); SCHRÖTER, Dirk, 71364 Winnenden (DE); WARSCHEFSKE, Enrico, 01920 Haselbachtal OT Giersdorf (DE)
(74) Vertreter: JENSEN & SON
(86) Internationale Anmeldenummer: PCT/EP2012/003023
(87) Internationale Veröffentlichungsnummer: WO 2013/017206

(56) Entgegenhaltungen:
- DE-A1-102009 035 478
- DE-A1-102009 035 495
- JP-A- 2002 298 825
- JP-A- 2011 023 531

## Beschreibung

Die Erfindung betrifft eine Einzelzelle für eine Batterie, umfassend einen in einem aus zwei Hüllblechen gebildeten Gehäuse angeordneten Elektrodenfolienstapel und einen Rahmen, mittels welchen die zwei Hüllbleche elektrisch voneinander isoliert sind, wobei Stromableiterfahnen von Elektrodenfolien einer Polarität zur Bildung eines Polkontaktes miteinander verbunden sind und der jeweilige Polkontakt mit einem Hüllblech verbunden ist und ein Hüllblech jeweils einen elektrischen Pol der Einzelzelle bildet. Darüber hinaus betrifft die Erfindung eine Batterie mit einer Anzahl von Einzelzellen.

Eine Hochvolt-Batterie für ein Fahrzeug, insbesondere für ein Elektrofahrzeug, für ein Hybridfahrzeug oder für ein mit Brennstoffzellen betriebenes Fahrzeug, ist aus einer Anzahl von parallel und/oder seriell miteinander verschalteten Einzelzellen, einer Elektronik und einer Kühlung/Heizung gebildet, wobei diese Bestandteile in einem Gehäuse angeordnet sind. Bei einer als Rahmenflachzelle ausgeführten Einzelzelle ist ein Elektrodenfolienstapel von zwei planaren oder einem planaren und einem schalenförmigen oder zwei schalenförmigen Hüllblechen umgeben. Der Elektrodenfolienstapel besteht aus Anoden- und Kathodenfolien, welche mittels eines Separators elektrisch voneinander isoliert sind. An mindestens einem Rand des Elektrodenfolienstapels sind die Elektrodenfolien unbeschichtet und ragen als Stromableiterfahnen aus dem Elektrodenfolienstapel heraus, wobei die Stromableiterfahnen zur Bildung eines Polkontaktes miteinander verbunden sind. Dabei ist ein Polkontakt mit jeweils einer Innenseite der Hüllbleche verbunden. Die Hüllbleche sind mittels eines elektrisch isolierenden Rahmens räumlich voneinander beabstandet und bilden die Pole der Einzelzelle. Eine beim Laden und Entladen der Einzelzelle entstehende Verlustwärme ist über die entsprechend aufgedickten Hüllbleche an eine Schmalseite der Einzelzelle leitbar und einer Wärmeleitplatte, welche von einem Klimakühlmittel und/oder einer Kühlflüssigkeit durchströmbar ist, zuführbar. Zur elektrischen Isolation der Einzelzellen und der metallischen Wärmeleitplatte ist zwischen den Einzelzellen und der Wärmeleitplatte eine elektrisch isolierende Wärmeleitfolie angeordnet, wobei die Hüllbleche im Bereich der Wärmeleitplatte parallel zu dieser um 90° abgewinkelt sind. Zum Verschließen der Einzelzelle ist bevorzugt ein Heißpressverfahren einsetzbar. Dazu ist der Rahmen zumindest im Bereich einer Siegelnaht aus einem thermoplastischen Material gebildet.

Entsprechende Ausführungsformen sind aus der DE 10 2009 035478 A1 und der DE 10 2009 035495 A1 bekannt.

Die JP 2011 023531 A offenbart eine Einzelzelle für eine Batterie, umfassend einen in einem aus zwei Hüllblechen gebildeten Gehäuse angeordneten Elektrodenfolienstapel und einen Rahmen, mittels welchen die zwei Hüllbleche elektrisch voneinander isoliert sind, wobei Stromableiterfahnen von Elektrodenfolien einer Polarität zur Bildung eines Polkontaktes verbunden sind und der jeweilige Polkontakt mit einem Hüllblech verbunden ist und ein Hüllblech jeweils einen elektrischen Pol der Einzelzelle bildet, wobei die Stromableiterfahnen der ersten Polarität an einer ersten Polseite und die Stromableiterfahnen der zweiten Polarität an einer zweiten Polseite im mittleren Bereich des Elektrodenfolienstapels herausgeführt und je in einem äußeren Bereich der Polseite zusammengeführt und zu dem Polkontakt miteinander verbunden sind und dass die Polkontakte parallel zur Polseite abgewinkelt und mit einem Hüllblech verbunden sind.

Die JP 2002 298825 A offenbart eine Einzelzelle für eine Batterie, umfassend einen in einem aus zwei Hüllblechen gebildeten Gehäuse angeordneten Elektrodenfolienstapel und einen Rahmen, mittels welchen die zwei Hüllbleche elektrisch voneinander isoliert sind, wobei Stromableiterfahnen von Elektrodenfolien einer Polarität zur Bildung eines Polkontaktes verbunden sind und der jeweilige Polkontakt mit einem Hüllblech verbunden ist und ein Hüllblech jeweils einen elektrischen Pol der Einzelzelle bildet, wobei die Stromableiterfahnen im mittleren Bereich des Elektrodenfolienstapels herausgeführt und je in einem äußeren Bereich der Polseite zusammengeführt und zu dem Polkontakt miteinander verbunden sind und dass die Polkontakte parallel zur Polseite abgewinkelt und mit einem Hüllblech verbunden sind.

Der Erfindung liegt die Aufgabe zugrunde, eine gegenüber dem Stand der Technik verbesserte Einzelzelle für eine Batterie und eine Batterie anzugeben.

Die Aufgabe wird erfindungsgemäß hinsichtlich der Einzelzelle durch die in Anspruch 1 und hinsichtlich der Batterie durch die in Anspruch 9 angegebenen Merkmale gelöst.

Vorteilhafte Ausgestaltungen der Erfindung sind Gegenstand der Unteransprüche.

Eine Einzelzelle für eine Batterie umfasst einen in einem aus zwei Hüllblechen gebildeten Gehäuse angeordneten Elektrodenfolienstapel und einen Rahmen, mittels welchen die zwei Hüllbleche elektrisch voneinander isoliert sind, wobei Stromableiterfahnen von Elektrodenfolien einer Polarität zur Bildung eines Polkontaktes miteinander verbunden sind und der jeweilige Polkontakt mit einem Hüllblech verbunden ist und ein Hüllblech jeweils einen elektrischen Pol der Einzelzelle bildet. Erfindungsgemäß sind die Stromableiterfahnen der gleichen Polarität an jeweils einer Polseite des Elektrodenfolienstapels herausgeführt und in einem mittleren Bereich der Polseite zu einem Polkontakt miteinander verbunden, wobei die Polkontakte parallel zur Polseite, insbesondere zu einer hälftigen Polseite abgewinkelt und mit einem Hüllblech verbunden sind.

Unter dem mittleren Bereich der Polseite, aus welchem die Stromableiterfahnen herausgeführt sind, wird dabei insbesondere jene Ebene des Elektrodenfolienstapels verstanden, die etwa mittig im Elektrodenfolienstapel angeordnet ist.

Dadurch, dass die Polkontakte parallel zur Polseite des Elektrodenfolienstapels abgewinkelt sind, können die Hüllbleche hinsichtlich ihrer Abmessungen, insbesondere hinsichtlich ihrer Längsausdehnung geringer bemessen werden, woraus in besonders vorteilhafter Weise weniger Bauraum zur Anordnung der Einzelzelle erforderlich ist. Zudem resultiert aus einer Verringerung der Längsausdehnung der Hüllbleche eine Materialeinsparung, wodurch die Einzelzelle im Vergleich kostengünstiger herstellbar ist und ein geringeres Gewicht aufweist.

Darüber hinaus ist mittels der Abwinklung der Polkontakte eine Kontaktierung dieser mit dem jeweiligen Hüllblech mit einem geringeren Bauraumbedarf durchführbar.
Bevorzugt sind die Hüllbleche schalenförmig ausgebildet und jeweils ein Polkontakt ist mit einer Stirnseitenwand eines Hüllbleches verbunden. Dabei ist die Polseite des Elektrodenfolienstapels besonders vorteilhaft in Richtung der Stirnseitenwand des schalenförmigen Hüllbleches angeordnet. Mittels der Verbindung des Polkontaktes mit dem Hüllblech ist das jeweilige Hüllblech Spannung führend und stellt somit einen elektrischen Pol der Einzelzelle dar.
Zur Sicherstellung einer dauerhaften Kontaktierung zwischen dem jeweiligen Polkontakt und der Stirnseite des schalenförmigen Hüllbleches ist der Polkontakt zumindest stoffschlüssig an der Stirnseitenwand des jeweiligen Hüllbleches befestigt. Zur Herstellung der stoffschlüssigen Verbindung eignet sich insbesondere ein Ultraschall-Schweißverfahren.
In einer alternativen Ausführungsform sind die Hüllbleche planar ausgebildet und der jeweilige Polkontakt des Elektrodenfolienstapels ist mittels eines elektrisch leitenden Kontaktierungselementes mit dem Hüllblech verbunden. Durch die planare Ausführung der Hüllbleche ist ein Aufwand zur Herstellung der Hüllbleche im Vergleich zur schalenförmigen Ausführungsform verringert, wodurch Kosten und ein Zeitaufwand bei der Herstellung der Einzelzelle verringert werden können. Dabei ist ein Kontaktierungselement an jeweils einer Polseite des Elektrodenfolienstapels angeordnet, um eine elektrische Verbindung zwischen dem Polkontakt und dem Hüllblech herzustellen, so dass das jeweilige Hüllblech im Betrieb der Einzelzelle 1 Spannung führt.
Vorzugsweise ist das Kontaktierungselement zumindest stoffschlüssig mit dem Hüllblech verbunden, wobei sich auch hierzu insbesondere das Ultraschall-Schweißverfahren eignet. Die Verbindung der Kontaktierungselemente mit dem jeweiligen Hüllblech ist besonders bevorzugt derart ausgeführt, dass die Kontaktierung zwischen den Polkontakten des Elektrodenfolienstapels und den Hüllblechen mittels des Kontaktierungselementes über die gesamte Lebensdauer der Einzelzelle bestehen bleibt.

In einer vorteilhaften Ausgestaltung ist das Kontaktierungselement ein Blech, welches zwischen dem Polkontakt und dem Hüllblech angeordnet ist und, wie oben beschrieben, zumindest mit dem Hüllblech stoffschlüssig verbunden ist. Dabei ist das Blech aus einem Metall gefertigt, welches in besonders vorteilhafter Weise eine sehr gute elektrische Leitfähigkeit und zudem eine hohe Wärmebeständigkeit aufweist, da die Einzelzelle beim Laden und Entladen, also im Betrieb derselben Verlustwärme erzeugt.

Um die Kontaktierung zwischen dem jeweiligen Hüllblech und dem jeweiligen Polkontakt des Elektrodenfolienstapels Bauraum optimiert realisieren zu können, ist das Blech vorzugsweise abgewinkelt ausgebildet und weist dadurch zwei Schenkel auf. Bevorzugt ist ein Schenkel mit dem Polkontakt und der andere Schenkel ist mit dem Hüllblech verbunden. Insbesondere sind die Schenkel des Bleches um 90° zueinander abgewinkelt, so dass der jeweilige Polkontakt unter dem Aspekt der Bauraumoptimierung flächig an dem einen Schenkel anliegt, wobei der andere Schenkel mit einer größtmöglichen Fläche mit dem Hüllblech verbunden ist.

In einer bevorzugten Ausführungsform der Einzelzelle ist der jeweilige Polkontakt zumindest stoffschlüssig an dem einen Schenkel des jeweiligen Bleches als Kontaktierungselement befestigt.

Des Weiteren kann vorgesehen sein, dass ein Hüllblech zur Bildung des Gehäuses der Einzelzelle schalenförmig und das andere Hüllblech planar ausgebildet ist, wobei der dem schalenförmigen Hüllblech zugeordnete Polkontakt mit der Stirnseitenwand des Hüllbleches und der dem planaren Hüllblech zugeordnete Polkontakt mittels des Kontaktierungselementes, insbesondere in Form des abgewinkelten Bleches, mit dem Hüllblech verbunden ist.

Die Erfindung betrifft weiterhin eine Batterie mit einer Anzahl von Einzelzellen, welche entsprechend der vorangegangenen Beschreibung ausgebildet sind. Dadurch, dass die Polkontakte im mittleren Bereich der jeweiligen Polseite des Elektrodenfolienstapels angeordnet und parallel zur Polseite abgewinkelt sind, können auch die Abmessungen der Batterie verringert werden, wodurch ein Bauraumbedarf zur Anordnung der Batterie sowie ein Gewicht der Batterie ebenfalls verringert sind.

Bevorzugt ist die Batterie eine Fahrzeugbatterie, insbesondere eine Traktionsbatterie eines Elektrofahrzeuges, eines Hybridfahrzeuges oder eines mit Brennstoffzellen betriebenes Fahrzeuges.

Dadurch, dass die Einzelzellen und dadurch eine mittels der Einzelzellen gebildete Fahrzeugbatterie Bauraum verringernd ausgeführt werden kann, ist wie oben beschrieben, auch ein Bauraum in einem Fahrzeug zur Anordnung der Batterie als Fahrzeugbatterie verringerbar. Zudem können dadurch auch ein Gewicht der Fahrzeugbatterie sowie ein Gesamtgewicht des Fahrzeuges verringert werden.

Ausführungsbeispiele der Erfindung werden im Folgenden anhand von Zeichnungen näher erläutert.

Dabei zeigen:
- Fig. 1: schematisch eine Einzelzelle mit planaren Hüllblechen zur Bildung eines Gehäuses in einer Explosionsdarstellung nach dem Stand der Technik,
- Fig. 2: schematisch eine perspektivische Ansicht der Einzelzelle mit den planaren Hüllblechen im zusammengesetzten Zustand,
- Fig. 3: schematisch die Einzelzelle mit den planaren Hüllblechen in einer Schnittdarstellung,
- Fig. 4: schematisch eine Einzelzelle mit schalenförmigen Hüllblechen in einer Explosionsdarstellung gemäß dem Stand der Technik,
- Fig. 5: schematisch die Einzelzelle mit den schalenförmigen Hüllblechen in einer Schnittdarstellung,
- Fig. 6: schematisch eine erste Ausführungsform einer erfindungsgemäßen Einzelzelle mit schalenförmigen Hüllblechen in einer Explosionsdarstellung,
- Fig. 7: schematisch eine perspektivische Ansicht der Einzelzelle gemäß Figur 6 im zusammengesetzten Zustand,
- Fig. 8: schematisch eine Schnittdarstellung der Einzelzelle,
- Fig. 9: schematisch eine Schnittdarstellung eines vergrößerten Ausschnittes der Einzelzelle,
- Fig. 10: schematisch in perspektivischer Ansicht die Einzelzelle mit auseinander geklappten Hüllblechen,
- Fig. 11: schematisch eine Schnittdarstellung der Einzelzelle mit auseinander geklappten Hüllblechen bei einem Herstellschritt,
- Fig. 12: schematisch eine zweite Ausführungsform der erfindungsgemäßen Einzelzelle mit planaren Hüllblechen und Kontaktierungselement in einer Explosionsdarstellung,
- Fig. 13: schematisch eine Schnittdarstellung der Einzelzelle und
- Fig. 14: schematisch eine Schnittdarstellung eines vergrößerten Ausschnittes der Einzelzelle.

Einander entsprechende Teile sind in allen Figuren mit den gleichen Bezugszeichen versehen.

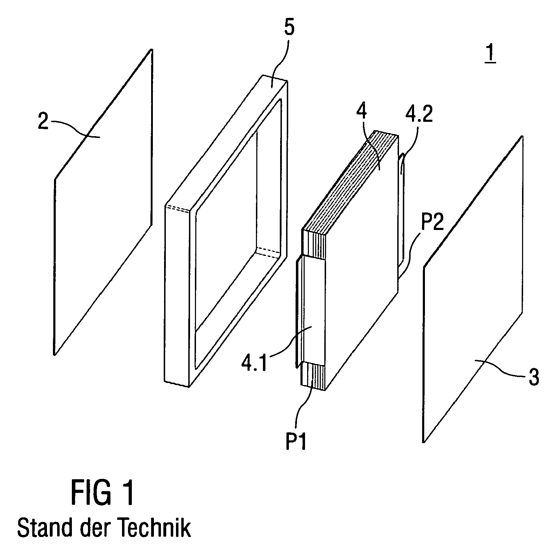

Die jeweils in den Figuren 1 bis 14 dargestellten Einzelzellen 1 sind Bestandteil einer Batterie, insbesondere einer Fahrzeugbatterie in Form einer Traktionsbatterie für ein Elektrofahrzeug, ein Hybridfahrzeug oder ein mit Brennstoffzellen betriebenes Fahrzeug.

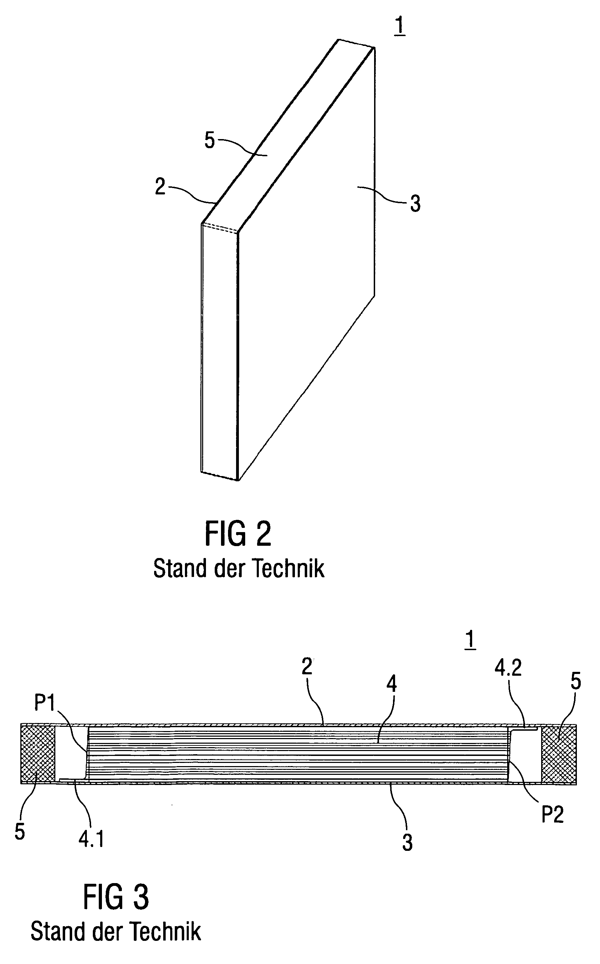

Die Figuren 1 bis 3 zeigen eine Einzelzelle 1 gemäß dem Stand der Technik mit zwei planaren Hüllblechen 2, 3 zur Bildung eines Gehäuses, wobei in der Figur 1 eine Explosionsdarstellung der Einzelzelle 1, in Figur 2 die Einzelzelle 1 im zusammengesetzten Zustand und in Figur 3 ein Längsschnitt der Einzelzelle 1 dargestellt ist.

Die Einzelzelle 1 gemäß dem Stand der Technik weist einen Elektrodenfolienstapel 4, einen Rahmen 5 und die zwei planaren Hüllbleche 2, 3 auf.

Der Elektrodenfolienstapel 4 ist aus einzelnen Elektrodenfolien, bevorzugt beschichteten Kupferfolien und beschichteten Aluminiumfolien gebildet, wobei zwischen den Kupfer- und Aluminiumfolien jeweils eine Separatorfolie zur räumlichen Trennung der Elektrodenfolien unterschiedlicher Polarität angeordnet ist. Dabei ist beidseitig an dem Elektrodenfolienstapel 4, diesen abschließend, jeweils eine Separatorfolie angeordnet, so dass der Elektrodenfolienstapel 4 gegenüber den Hüllblechen 2, 3 separiert und somit elektrisch isoliert ist.

An jeweils einer Polseite P1, P2 des Elektrodenfolienstapels 4 ist ein Abschnitt der Elektrodenfolien unbeschichtet aus dem Elektrodenfolienstapel 4 herausgeführt, wobei dieser überstehende Bereich einer Elektrodenfolie als Stromableiterfahne bezeichnet wird.

Die Stromableiterfahnen sind in Bezug auf eine Längsausdehnung der Polseite P1, P2 mittig aus dem Elektrodenfolienstapel 4 herausgeführt.

Zur Bildung eines Polkontaktes 4.1, 4.2 sind die Stromableiterfahnen der Elektrodenfolien einer Polarität miteinander verbunden, d. h. die Stromableiterfahnen sind aneinander geheftet. Des Weiteren ist zur Bildung eines elektrischen Pols der Einzelzelle 1 jeweils ein Polkontakt 4.1, 4.2 einer Polseite P1, P2 des Elektrodenfolienstapels 4 mit einer Innenseite des jeweiligen Hüllbleches 2, 3 verbunden. Dazu werden die Polkontakte 4.1, 4.2 bei Herstellung der Einzelzelle 1 in einem Pressverfahren und/oder Schmelzschweißverfahren, beispielsweise Widerstandspunktschweißen, UltraschallSchweißen und/oder Laserschweißen an dem jeweiligen Hüllblech 2, 3 befestigt.

Denkbar ist auch, dass der jeweilige Polkontakt 4.1, 4.2 zusätzlich oder alternativ, z. B. mittels Nieten kraftschlüssig an dem entsprechenden Hüllblech 2, 3 befestigt ist.

Um die beiden Hüllbleche 2, 3, welche als elektrische Pole der Einzelzelle 1 im Betrieb derselben Spannung führen, räumlich voneinander zu trennen und dadurch elektrisch voneinander zu isolieren, ist zwischen den beiden Hüllblechen 2, 3 der den Elektrodenfolienstapel 4 randseitig umlaufende Rahmen 5 angeordnet. Bevorzugt ist der Rahmen 5 zumindest abschnittsweise aus einem thermoplastischen Material gebildet, so dass der Rahmen 5 vorzugsweise in einem Heißpressverfahren beidseitig mit den Hüllblechen 2, 3 verbindbar ist.

Dabei weist die Einzelzelle 1 im zusammengesetzten Zustand eine Quaderform auf, wie in den Figuren 2 und 3 näher dargestellt ist.

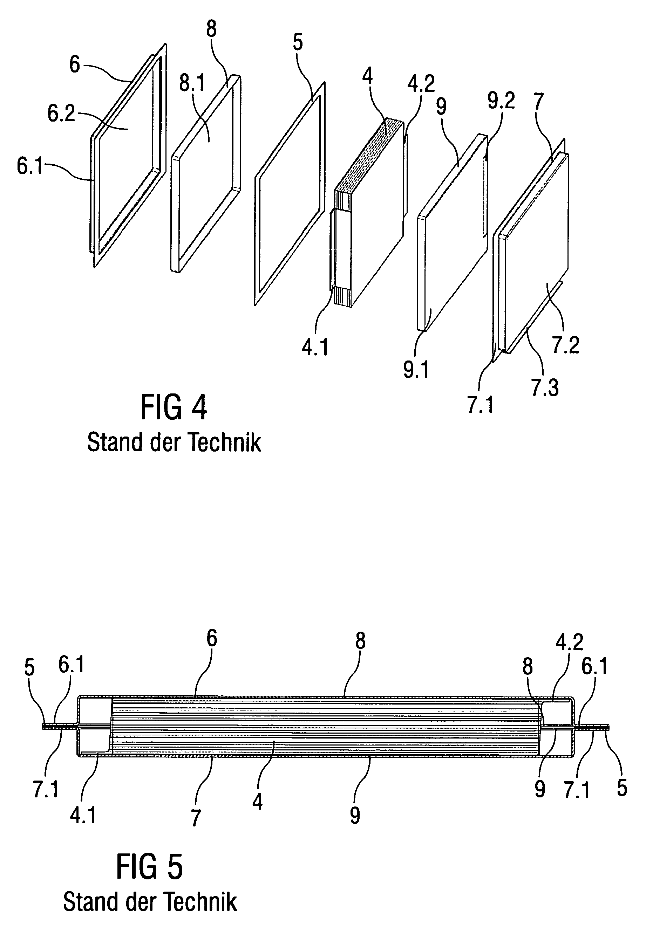

In den Figuren 4 und 5 ist eine weitere Ausführungsform der Einzelzelle 1 nach dem Stand der Technik gezeigt, wobei schalenförmige Hüllbleche 6, 7 zur Bildung des Gehäuses vorgesehen sind.

Zusätzlich weist die Einzelzelle 1 in dieser Ausführungsform zwei Isolationsschalen 8, 9 auf, in denen der Elektrodenfolienstapel 4 im zusammengesetzten Zustand der Einzelzelle 1 angeordnet ist. Mittels der Isolationsschalen 8, 9 ist der Elektrodenfolienstapel 4 gegenüber den schalenförmigen Hüllblechen 6, 7 elektrisch isoliert, wobei die Isolationsschalen 8, 9 hierzu aus einem elektrisch nicht leitenden Material gebildet sind oder zumindest mit einem elektrisch nicht leitenden Material beschichtet sind. Darüber hinaus sind die schalenförmigen Hüllbleche 6, 7 mittels der Isolationsschalen 8, 9 elektrisch voneinander isoliert.

Die Isolationsschalen 8, 9 weisen an ihrer flächenmäßig größten Seite 8.1, 9.1 jeweils eine rechteckförmige Aussparung 9.2 auf, durch welche jeweils ein Polkontakt 4.1, 4.2 des Elektrodenfolienstapels 4 bei Montage der Einzelzelle 1 führbar ist. Ist der Elektrodenfolienstapel 4 in den Isolationsschalen 8, 9 angeordnet und die Polkontakte 4.1, 4.2 sind durch die Aussparungen 9.2 geführt, wird die somit gebildete Baugruppe in einem der schalenförmigen Hüllbleche 6, 7 angeordnet. Dabei liegt ein Polkontakt 4.1, 4.2 des Elektrodenfolienstapels 4 an der Innenseite des schalenförmigen Hüllbleches 6, 7 an und wird bevorzugt zumindest stoffschlüssig mit diesem verbunden.

Die schalenförmigen Hüllbleche 6, 7 zur Bildung des Gehäuses sind in ihren Randbereichen abgewinkelt, so dass das jeweilige schalenförmige Hüllblech 6, 7 einen parallel zu seiner flächenmäßig größten Seite 6.2, 7.2 verlaufenden Rand 6.1, 7.1 aufweist.

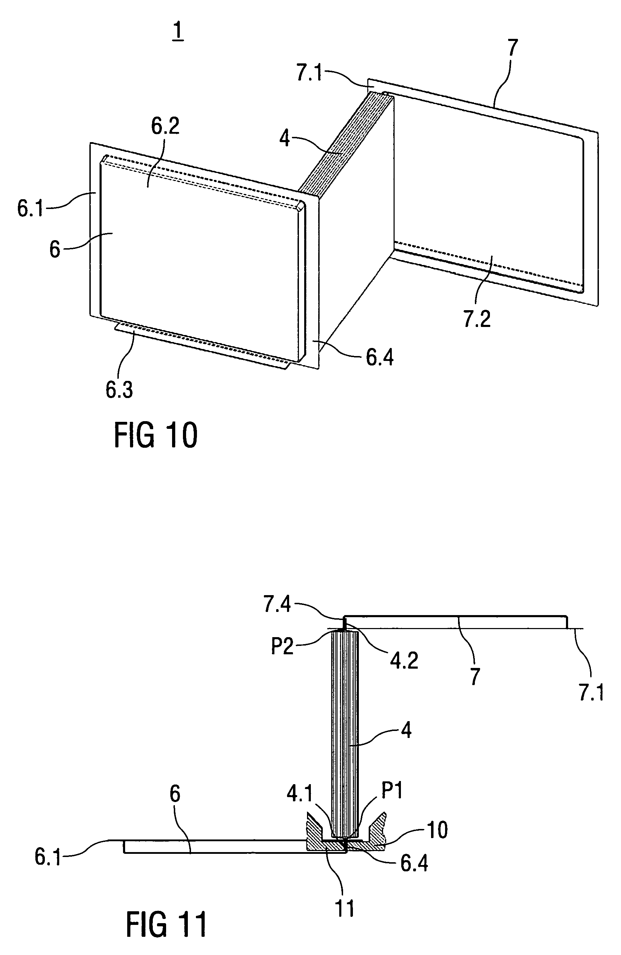

Zusätzlich sind an dem jeweiligen Rand 6.1, 7.1 der schalenförmigen Hüllbleche 6, 7 entsprechend der Längsausdehnung des Elektrodenfolienstapels 4 und entsprechend der Längsausdehnung der schalenförmigen Hüllbleche 6, 7 senkrecht zum Rand 6.1, 7.1 abstehende Abwinklungen 6.3, 7.3 ausgebildet oder angeformt, wobei die Abwinklung 6.3 des ersten schalenförmigen Hüllbleches 6 in der Figur 10 gezeigt ist.

Die Abwinklungen 6.3, 7.3 an den schalenförmigen Hüllblechen 6, 7 dienen einer verbesserten Abführung einer in der Einzelzelle 1 beim Laden und Entladen entstehenden Verlustwärme, wobei die Verlustwärme einer zu der Batterie gehörenden Wärmeleitplatte zugeführt werden kann.

Zwischen diesen Rändern 6.1, 7.1 der schalenförmigen Hüllbleche 6, 7 ist der Rahmen 5 angeordnet, welcher der elektrischen Isolation der schalenförmigen Hüllbleche 6, 7 gegeneinander und dem, z. B. mittels des Heißpressverfahrens durchgeführten Verschließen der Einzelzelle 1 dient.

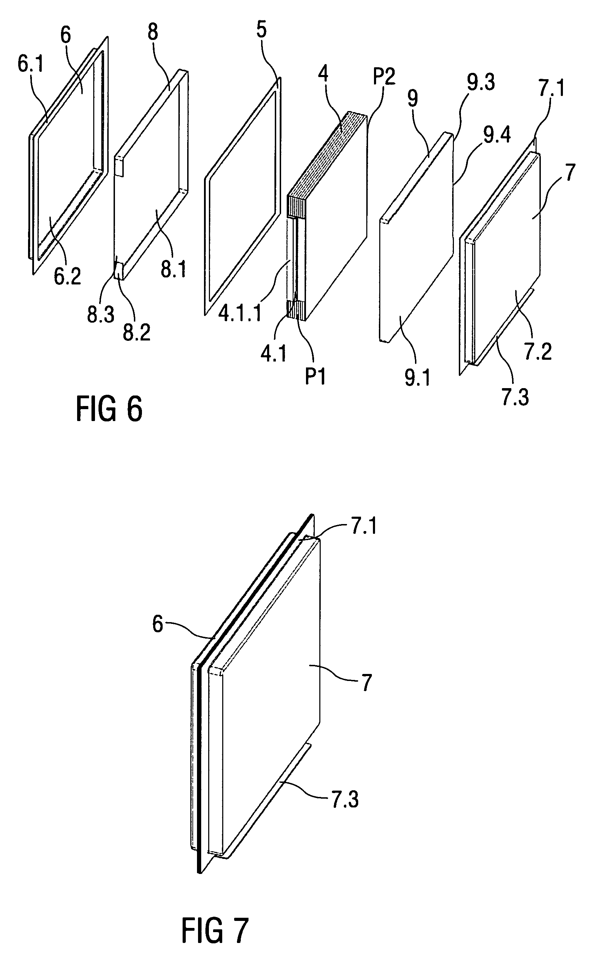

In Figur 6 ist eine Explosionsdarstellung einer erfindungsgemäßen ersten Ausführungsform einer Einzelzelle 1 dargestellt.

Die Einzelzelle 1 weist zwei schalenförmige Hüllbleche 6, 7, zwei Isolationsschalen 8, 9, den Rahmen 5 und den Elektrodenfolienstapel 4 auf.

Um die Einzelzelle 1 Bauraum optimiert auszuführen und eine Kontaktierung der Polkontakte 4.1, 4.2 mit den schalenförmigen Hüllblechen 6, 7 mit einem vergleichsweise geringen Bauraumbedarf zu realisieren, ist erfindungsgemäß vorgesehen, dass die Stromableiterfahnen der Elektrodenfolien einer Polarität hinsichtlich der Breite der jeweiligen Polseite P1, P2 mittig aus den Elektrodenfolienstapel 4 herausgeführt und parallel zur Polseite P1, P2, insbesondere zu einer Hälfte der jeweiligen Polseite P1, P2 abgewinkelt sind.

Dabei weist der jeweilige abgewinkelte Abschnitt 4.1.1, 4.2.1 des Polkontaktes 4.1, 4.2 zur elektrischen Isolation zu der entsprechenden Polseite P1, P2 des Elektrodenfolienstapels 4 einen vorgebbaren Abstand auf.

Der jeweilige abgewinkelte Abschnitt 4.1.1, 4.2.1 ist zur Bildung eines elektrischen Pols der Einzelzelle 1 mit einem schalenförmigen Hüllblech 6, 7 verbunden, wobei die Polkontakte 4.1, 4.2 des Elektrodenfolienstapels 4 hierzu jeweils in gegenläufige Richtungen abgewinkelt sind.

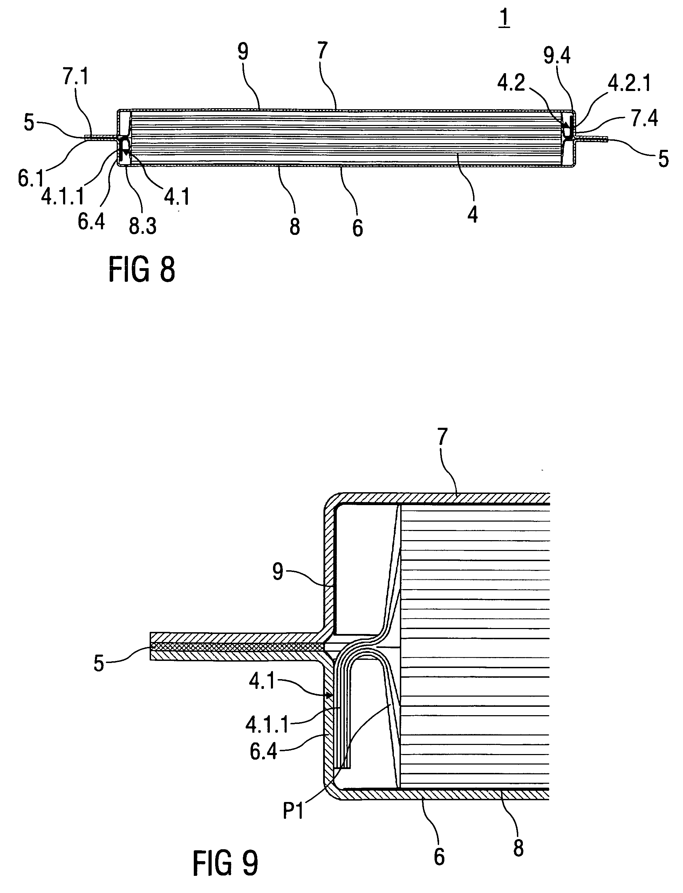

Mit anderen Worten ist eine Spitze des einen abgewinkelten Abschnittes 4.1.1 in Richtung des einen schalenförmigen Hüllbleches 6 angeordnet und eine Spitze des anderen abgewinkelten Abschnittes 4.2.1 ist in Richtung des anderen schalenförmigen Hüllbleches 7 angeordnet, wie in der Figur 8 näher gezeigt ist.

Zur Kontaktierung der Polkontakte 4.1, 4.2 mit einer Stirnseitenwand 6.4, 7.4 des jeweiligen schalenförmigen Hüllbleches 6, 7 weisen die Isolationsschalen 8, 9 jeweils an einer dem entsprechenden Polkontakt 4.1, 4.2 zugeordneten Stirnseitenwand 8.2, 9.3 eine Materialausnehmung 8.3, 9.4 auf.

Dabei sind die Abmessungen der Materialausnehmungen 8.3, 9.4 größer gewählt als zumindest die Länge des abgewinkelten Abschnittes 4.1.1. 4.2.1 der Polkontakte 4.1, 4.2, wie in der Figur 8 und 9 näher dargestellt ist.

In Figur 7 ist die Einzelzelle 1 im zusammengesetzten Zustand dargestellt, wobei sich die erfindungsgemäße Einzelzelle 1 im zusammengesetzten Zustand von außen im Wesentlichen nicht von der in den Figuren 4 und 5 dargestellten Einzelzelle 1 unterscheidet.

Die Figuren 8 und 9 zeigen die Einzelzelle 1 in ihrer ersten Ausführungsform jeweils in einem Längsschnitt, wobei in der Figur 9 ein vergrößerter Ausschnitt einer Polseite P1 des Elektrodenfolienstapels 4 mit einem abgewinkelten Polkontakt 4.1 dargestellt ist.

Der abgewinkelte Abschnitt 4.1.1 ist mit der Stirnseitenwand 6.4 des ersten schalenförmigen Hüllbleches 6 verbunden, wobei der Polkontakt 4.1 in Richtung dieser Stirnseitenwand 6.4 abgewinkelt ist.

Um eine dauerhafte Verbindung und somit die elektrische Kontaktierung zwischen den Polkontakten 4.1, 4.2 und den entsprechenden schalenförmigen Hüllblechen 6, 7 herzustellen, wird der jeweilige abgewinkelte Abschnitt 4.1.1, 4.2.1 bevorzugt mittels eines Ultraschall-Schweißverfahrens an der Stirnseitenwand 6.4, 7.4 des jeweiligen schalenförmigen Hüllbleches 6, 7 befestigt.

Der abgewinkelte Abschnitt 4.1.1, 4.2.1 des jeweiligen Polkontaktes 4.1, 4.2 liegt mit seiner größtmöglichen Fläche an der Stirnseitenwand 6.4, 7.4 des entsprechenden schalenförmigen Hüllbleches 6, 7 an, wodurch die elektrische Kontaktierung hergestellt ist und das jeweilige Hüllblech 6, 7 im Betrieb der Einzelzelle 1 Spannung führt.

Figur 10 zeigt die Einzelzelle 1 im aufgeklappten Zustand der schalenförmigen Hüllbleche 6, 7, um den jeweiligen Polkontakt 4.1, 4.2 mit der entsprechenden Stirnseitenwand 6.4, 7.4 des jeweiligen Hüllbleches 6, 7 zu verbinden, was in der Figur 11 in einer Schnittdarstellung näher dargestellt ist.

Bei Herstellung der Einzelzelle 1, d. h. bei Verbindung der Polkontakte 4.1, 4.2 mit der jeweiligen Stirnseitenwand 6.4, 7.4 wird der Elektrodenfolienstapel 4 in Bezug auf die beiden schalenförmigen Hüllbleche 6, 7 so ausgerichtet angeordnet, dass die noch nicht abgewinkelten Polkontakte 4.1, 4.2 an der ihr zugeordneten Stirnseitenwand 6.4, 7.4 flächig anliegen.

Der Elektrodenfolienstapel 4 ist mit seiner Längsausdehnung senkrecht zur Längsausdehnung eines der schalenförmigen Hüllbleche 6, 7 angeordnet, so dass für Bestandteile eines Befestigungswerkzeuges ein hinsichtlich der Stirnseitenwand 6.4, 7.4 beidseitiger Zugang besteht. Dabei wird das schalenförmige Hüllblech 6 mit einer Außenseite der Stirnseitenwand 6.4, an welcher der Polkontakt 4.1 befestigt werden soll, an einem feststehenden Amboss 10 angeordnet, wobei der noch nicht abgewinkelte Polkontakt 4.1 mittels einer bewegten Sonotrode 11 an die Stirnseitenwand 6.4 geschweißt wird.

Der gleiche Verfahrensschritt wird mit dem weiteren Polkontakt 4.2 und der entsprechenden Stirnseitenwand 7.4 des verbleibenden schalenförmigen Hüllbleches 7 durchgeführt, so dass die beiden Polkontakte 4.1, 4.2 zumindest stoffschlüssig an dem jeweiligen schalenförmigen Hüllblech 6, 7 befestigt sind.

Anschließend daran wird das freie Ende des jeweiligen schalenförmigen Hüllbleches 6, 7 in Richtung des Elektrodenfolienstapels 4 geschwenkt, wodurch die Polkontakte 4.1, 4.2 um 90° in Bezug auf ihre Ausgangsposition gebogen werden, so dass der abgewinkelte Abschnitt 4.1.1, 4.2.1 parallel zur jeweiligen Polseite P1, P2 angeordnet ist.

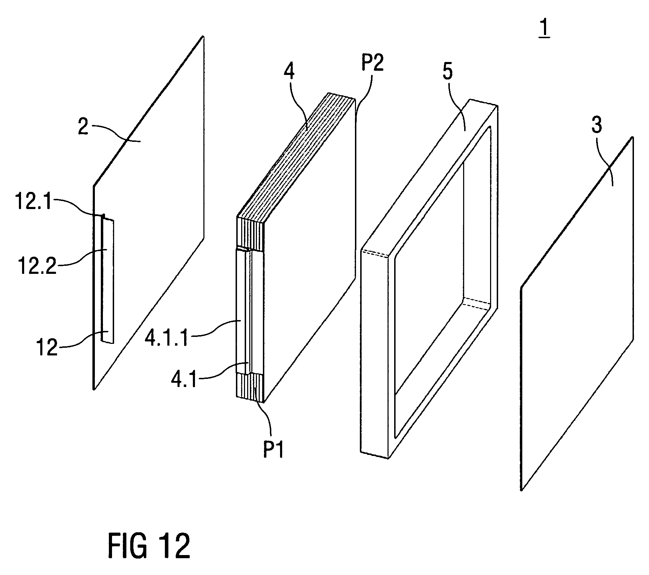

In den Figuren 12 bis 14 ist eine zweite Ausführungsform der erfindungsgemäßen Einzelzelle 1 in einer perspektivischen Ansicht dargestellt.

Bei dieser Ausführungsform sind die Hüllbleche 2, 3, wie in den Figuren 1 bis 3 gezeigt ist, planar, also eben und nicht schalenförmig ausgebildet.

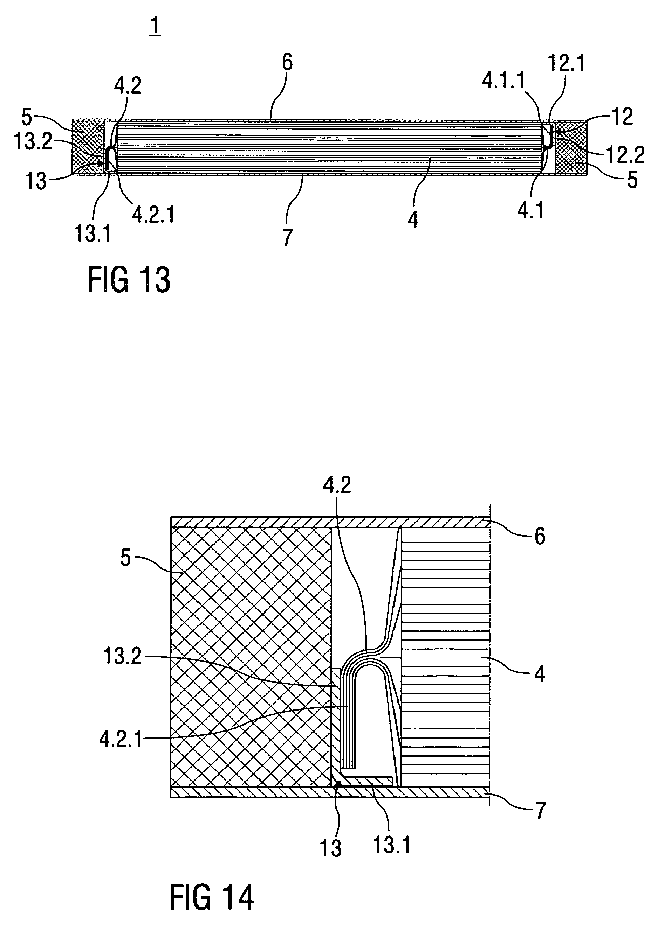

Zur Kontaktierung des jeweiligen Polkontaktes 4.1, 4.2 mit dem entsprechenden Hüllblech 2, 3 ist ein Kontaktierungselement 12, 13 in Form eines abgewinkelten Bleches, welches eine vergleichsweise hohe elektrische Leitfähigkeit aufweist, vorgesehen. Dadurch, dass das Kontaktierungselement 12, 13 abgewinkelt ist, weist dasselbe zwei Schenkel 12.1, 12.2, 13.1, 13.2 auf, wobei einer erster Schenkel 12.1, 13.1 mit dem Hüllblech 2, 3 und ein zweiter Schenkel 12.2, 13.2 mit dem Polkontakt 4.1, 4.2 verbunden ist, wie in den Figuren 13 und 14 im Detail gezeigt ist.

Um den jeweiligen Polkontakt 4.1, 4.2 mit dem Kontaktierungselement 12, 13 und über das Kontaktierungselement 12, 13 mit dem entsprechenden Hüllblech 2, 3 zu verbinden, kann vorgesehen sein, als erstes den ersten Schenkel 12.1, 13.1 mittels Ultraschall-Schweißens an dem jeweiligen Hüllblech 2, 3 zu befestigen.

Der jeweilige Polkontakt 4.1, 4.2 des Elektrodenfolienstapels 4 ist noch nicht abgewinkelt und wird senkrecht zur Längsausdehnung des Hüllbleches 2, 3 und somit auch senkrecht zu dem ersten Schenkel 12.1, 13.1 des entsprechenden Kontaktierungselementes 12, 13 an einer dem Polkontakt 4.1, 4.2 zugeordneten Fläche des zweiten Schenkels 12.2, 13.2 angeordnet. Daran anschließend wird der Pokontakt 4.1, 4.2 mittels Ultraschall-Schweißens an dem zweiten Schenkel 12.2, 13.2 befestigt.

Darauf folgend werden die mittels des Kontaktierungselementes 12, 13 an den Polkontakten 4.1, 4.2 befestigten Hüllbleche 2, 3 in Richtung des Elektrodenfolienstapels 4 geschwenkt, so dass die Polkontakte 4.1, 4.2 hinsichtlich ihrer Ausgangsposition um 90° gebogen werden und somit parallel zur jeweiligen Polseite P1, P2 angeordnet sind.

Der zweite Schenkel 12.2, 13.2 des Kontaktierungselementes 12, 13 liegt mit seiner dem Polkontakt 4.1, 4.2 abgewandten Seite an dem Rahmen 5, innerhalb welchem der Elektrodenfolienstapel 4 angeordnet ist, an.

Der jeweilige abgewinkelte Abschnitt 4.1.1, 4.2.1 der Polkontakte 4.1, 4.2 ist mittels des Kontaktierungselementes 12, 13 mit dem entsprechenden Hüllblech 2, 3 verbunden, so dass die Hüllbleche 2, 3 im Betrieb der Einzelzelle 1 Spannung führen.

Mittels der Kontaktierungselemente 12, 13 ist eine Bauraum verringernde Kontaktierung der Polkontakte 4.1, 4.2 mit dem jeweiligen Hüllblech 2, 3 realisierbar.

In einer möglichen dritten Ausführungsform weist die Einzelzelle 1 zur Bildung des Gehäuses sowohl ein schalenförmiges Hüllblech 6, 7 als auch ein planares Hüllblech 2, 3 auf, wobei die Kontaktierung der Polkontakte 4.1, 4.2 mit dem jeweiligen Hüllblech 2, 3, 6, 7, wie oben näher erläutert ist, erfolgt.

Der Elektrodenfolienstapel 4 kann mittels einzelner Elektrodenfolien und Separatorfolien, die aufeinander gestapelt sind, ausgebildet sein.

Alternativ dazu können aus den Elektrodenfolien unterschiedlicher Polarität und den Separatorfolien Bänder gebildet werden, welche gewickelt, insbesondere flach gewickelt werden oder die Separatorfolien werden z-förmig gefaltet und die Elektrodenfolien werden in Bezug auf die Polarität abwechselnd seitlich in die dadurch gebildeten Taschen der Separatorfolie eingeschoben.

Dadurch, dass die Polkontakte 4.1, 4.2 des Elektrodenfolienstapels 4 im Vergleich zum Stand der Technik abgewinkelt sind, können die Abmessungen der Hüllbleche 2, 3, 6, 7 insbesondere in Bezug auf deren Längsausdehnung verringert werden. Dadurch ist die Einzelzelle 1 zumindest hinsichtlich ihrer Längsausdehnung verkleinerbar, wodurch ein Materialeinsatz bei der Herstellung der Hüllbleche 2, 3, 6, 7 verringerbar ist. Zudem ist durch den verringerten Materialeinsatz eine Gewichtseinsparung der Einzelzelle 1 erzielbar.

Ist die Einzelzelle 1 Bestandteil einer Batterie, insbesondere einer Fahrzeugbatterie, welche eine vorgebbare Anzahl der derartig ausgebildeten Einzelzellen 1 umfasst, kann dieselbe, d. h. ein Batteriegehäuse entsprechend der Abmessungen der Einzelzellen 1 verkleinert werden, wodurch ein Bauraumbedarf zur Anordnung der Batterie und ein Gewicht der Batterie ebenfalls verringert sind.

### Bezugszeichenliste

- 1: Einzelzelle
- 2: Hüllblech
- 3: Hüllblech
- 4: Elektrodenfolienstapel
- 4.1: Polkontakt
- 4.2: Polkontakt
- 5: Rahmen
- 6: erstes schalenförmiges Hüllblech
- 6.1: Rand
- 6.2: flächenmäßig größte Seite
- 6.3: Abwinklung
- 6.4: Stirnseitenwand
- 7: zweites schalenförmiges Hüllblech
- 7.1: Rand
- 7.2: flächenmäßig größte Seite
- 7.3: Abwinklung
- 7.4: Stirnseitenwand
- 8: Isolationsschale
- 8.1: flächenmäßig größte Seite
- 8.2: Stirnseitenwand
- 8.3: Materialausnehmung
- 9: Isolationsschale
- 9.1: flächenmäßig größte Seite
- 9.2: Aussparung
- 9.3: Stirnseitenwand
- 9.4: Materialausnehmung
- 10: Amboss
- 11: Sonotrode
- 12: Kontaktierungselement
- 12.1: erster Schenkel
- 12.2: zweiter Schenkel
- 13: Kontaktierungselement
- 13.1: erster Schenkel
- 13.2: zweiter Schenkel

- P1: Polseite
- P2: Polseite

## Patentansprüche

1. Einzelzelle (1) für eine Batterie, umfassend einen in einem aus zwei Hüllblechen (2, 3, 6, 7) gebildeten Gehäuse angeordneten Elektrodenfolienstapel (4) und einen Rahmen (5), mittels welchen die zwei Hüllbleche (2, 3, 6, 7) elektrisch voneinander isoliert sind, wobei Stromableiterfahnen von Elektrodenfolien einer Polarität zur Bildung eines Polkontaktes (4.1, 4.2) miteinander verbunden sind und der jeweilige Polkontakt (4.1, 4.2) mit einem Hüllblech (2, 3, 6, 7) verbunden ist und ein Hüllblech (2, 3, 6, 7) jeweils einen elektrischen Pol der Einzelzelle (1) bildet,
**dadurch gekennzeichnet, dass**
die Stromableiterfahnen der ersten Polarität an einer ersten Polseite (P1) und die Stromableiterfahnen der zweiten Polarität an einer zweiten Polseite (P2) im mittleren Bereich des Elektrodenfolienstapels (4) herausgeführt und je in einem mittleren Bereich hinsichtlich der Breite der jeweiligen Polseite (P1, P2) zusammengeführt und zu dem Polkontakt (4.1, 4.2) miteinander verbunden sind und dass die Polkontakte (4.1, 4.2) parallel zur Polseite (P1, P2) abgewinkelt und mit einem Hüllblech (2, 3, 6, 7) verbunden sind.

2. Einzelzelle (1) nach Anspruch 1,
**dadurch gekennzeichnet, dass**
die Hüllbleche (6, 7) schalenförmig ausgebildet sind und jeweils ein Polkontakt (4.1, 4.2) mit einer Stirnseitenwand (6.4, 7.4) eines Hüllbleches (6, 7) verbunden ist.

3. Einzelzelle (1) nach Anspruch 2,
**dadurch gekennzeichnet, dass**
der jeweilige Polkontakt (4.1, 4.2) zumindest stoffschlüssig an der Stirnseitenwand (6.4, 7.4) des jeweiligen Hüllbleches (6, 7) befestigt ist.

4. Einzelzelle (1) nach Anspruch 1,
**dadurch gekennzeichnet, dass**
die Hüllbleche (2, 3) planar ausgebildet sind und der jeweilige Polkontakt (4.1, 4.2) mittels eines elektrisch leitenden Kontaktierungselementes (12, 13) mit dem Hüllblech (2, 3) verbunden ist.

5. Einzelzelle (1) nach Anspruch 4,
**dadurch gekennzeichnet, dass**
das Kontaktierungselement (12, 13) zumindest stoffschlüssig mit dem Hüllblech (2, 3) verbunden ist.

6. Einzelzelle (1) nach Anspruch 4,
**dadurch gekennzeichnet, dass**
das Kontaktierungselement (12, 13) ein Blech ist.

7. Einzelzelle (1) nach Anspruch 6,
**dadurch gekennzeichnet, dass**
das Blech abgewinkelt ist und mit einem Schenkel (12.2, 13.2) mit dem Polkontakt (4.1, 4.2) und mit dem anderen Schenkel (12.1, 13.1) mit dem Hüllblech (2, 3) verbunden ist.

8. Einzelzelle (1) nach Anspruch 7,
**dadurch gekennzeichnet, dass**
der jeweilige Polkontakt (4.1, 4.2) zumindest stoffschlüssig an dem einen Schenkel (12.2, 13.2) des jeweiligen Bleches befestigt ist.

9. Batterie mit einer Anzahl von Einzelzellen (1) nach einem der Ansprüche 1 bis 8.

10. Batterie nach Anspruch 9,
**dadurch gekennzeichnet, dass**
die Batterie eine Fahrzeugbatterie, insbesondere eine Traktionsbatterie eines Elektrofahrzeuges, eines Hybridfahrzeuges oder eines mit Brennstoffzellen betriebenen Fahrzeuges ist.

## Claims

1. Individual cell (1) for a battery, comprising an electrode stack (4) located in a housing formed from two cover plates (2, 3, 6, 7) and a frame (5), by means of which the two cover plates (2, 3, 6, 7) are electrically insulated against one another, wherein current arrester lugs of electrode foils of one polarity are connected to one another to form a pole contact (4.1, 4.2) and the respective pole contact (4.1, 4.2) is connected to a cover plate (2, 3, 6, 7) and each cover plate (2, 3, 6, 7) forms an electric pole of the individual cell (1),
**characterised in that**
the current arrester lugs of the first polarity are led out at a first pole side (P1) and the current arrester lugs of the second polarity are led out at a second pole side (P2) in the central region of the electrode stack (4) and brought together in a central region with respect to the width of the respective pole side (P1, P2) and joined together to form the pole contact (4.1, 4.2), and **in that** the pole contacts (4.1, 4.2) are angled parallel to the pole side (P1, P2) and connected to a cover plate (2, 3, 6, 7).

2. Individual cell according to claim 1,
**characterised in that**
the cover plates (6, 7) are shell-shaped and one pole contact (4.1, 4.2) each is connected to an end-side wall (6.4, 7.4) of a cover plate (6, 7).

3. Individual cell according to claim 2,
**characterised in that**
the respective pole contact (4.1, 4.2) is secured to the end-side wall (6.4, 7.4) of the respective cover plate (6, 7) at least by adhesive force.

4. Individual cell according to claim 1,
**characterised in that**
the cover plates (2, 3) are designed to be planar and the respective pole contact (4.1, 4.2) is connected to the cover plate (2, 3) by means of an electrically conductive contacting element (12, 13).

5. Individual cell according to claim 4,
**characterised in that**
the contacting element (12, 13) is connected to the cover plate (2, 3) at least by adhesive force.

6. Individual cell according to claim 4,
**characterised in that**
the contacting element (12, 13) is a sheet.

7. Individual cell according to claim 6,
**characterised in that**
the sheet is angled and connected to the pole contact (4.1, 4.2) by one leg (12.2, 13.2) and to the cover plate (2, 3) by the other leg (12.1, 13.1).

8. Individual cell according to claim 7,
**characterised in that**
the respective pole contact (4.1, 4.2) is secured to the one leg (12.2, 13.2) of the respective sheet at least by adhesive force.

9. Battery comprising a number of individual cells (1) according to any of claims 1 to 8.

10. Battery according to claim 9,
**characterised in that**
the battery is a vehicle battery, in particular a traction battery of an electric vehicle, a hybrid vehicle or a vehicle operated with fuel cells.

## Revendications

1. Élément individuel (1) d'une batterie comprenant un empilement de feuilles d'électrode (4) disposé dans un boîtier formé à partir de deux tôles enveloppantes (2, 3, 6, 7) et un cadre (5), qui permettent isoler électriquement les deux tôles enveloppantes (2, 3, 6,7), des cosses de dérivation de courant des feuilles d'électrodes d'une polarité étant reliées entre elles pour former un contact polaire (4.1, 4.2) et le contact polaire respectif (4.1, 4.2) étant relié à une tôle enveloppante (2, 3, 6, 7), et une tôle enveloppante (2, 3, 6, 7) forme respectivement un pôle électrique de l'élément individuel (1), **caractérisé en ce que** les cosses de dérivation de courant de la première polarité sur un premier côté de pôle (P1) et les cosses de dérivation de courant de la seconde polarité sur un second côté de pôle (P2) font saillie dans la zone centrale de l'empilement de feuilles d'électrode (4) et sont rassemblées respectivement dans une zone centrale quant à la largeur de chaque côté de pôle (P1, P2), et sont reliées ensemble au contact polaire (4.1, 4.2) et **en ce que** les contacts polaires (4.1, 4.2) étant coudés parallèlement au côté de pôle (P1, P2) et sont reliés à une tôle enveloppante (2, 3, 6, 7).

2. Élément individuel (1) selon la revendication 1, **caractérisé en ce que** les tôles enveloppante (6, 7) sont en forme de coque et chaque contact polaire (4.1, 4.2) est relié à une paroi latérale avant (6.4, 7.4) d'une tôle enveloppante.

3. Élément individuel (1) selon la revendication 2, **caractérisé en ce que** chaque contact polaire (4.1, 4.2) est fixé par liaison de matière à la paroi latérale avant (6.4, 7.4) de chaque tôle enveloppante (6, 7).

4. Élément individuel (1) selon la revendication 1, **caractérisé en ce que** les tôles enveloppantes (2, 3) sont planes et chaque contact polaire (4.1, 4.2) est relié au moyen d'un élément de mise en contact électroconducteur (12, 13) à une tôle enveloppante (2, 3).

5. Élément individuel (1) selon la revendication 4, **caractérisé en ce que** l'élément de mise en contact (12, 13) est relié au moins par liaison de matière à la tôle enveloppante (2, 3).

6. Élément individuel (1) selon la revendication 4, **caractérisé en ce que** l'élément de mise en contact (12, 13) est une tôle.

7. Élément individuel (1) selon la revendication 6, **caractérisé en ce que** la tôle est coudée et reliée à l'aide d'un montant (12.2, 13.2) au contact polaire (4.1, 4.2) et à l'aide de l'autre montant (12.1, 13.1) à la tôle enveloppante (2, 3).

8. Élément individuel (1) selon la revendication 7, **caractérisé en ce que** chaque contact polaire (4.1, 0,4) est fixé au moins par liaison de matière à l'un des montants (12.2, 13.2) de chaque tôle.

9. Batterie dotée d'une pluralité d'éléments individuels (1) selon l'une quelconque des revendications 1 à 8.

10. Batterie selon la revendication 9, **caractérisée en ce que** la batterie est une batterie de véhicule automobile, en particulier une batterie de traction d'un véhicule automobile électrique, d'un véhicule automobile hybride ou d'un véhicule automobile fonctionnant à l'aide de piles à combustible.
